## Europäisches Patentamt
## European Patent Office
## Office européen des brevets

(19)

(11) Numéro de publication: **0 098 758**
**A2**

(12)

# DEMANDE DE BREVET EUROPEEN

(21) Numéro de dépôt: **83400963.1**

(22) Date de dépôt: **11.05.83**

(51) Int. Cl.³: **B 23 K 9/30**

(30) Priorité: **17.05.82 FR 8208566**

(71) Demandeur: **Cabrol, Lucien, 12 rue des Carmes, F-13000 Arles (FR)**

(43) Date de publication de la demande: **18.01.84 Bulletin 84/3**

(72) Inventeur: **Cabrol, Lucien, 12 rue des Carmes, F-13000 Arles (FR)**

(84) Etats contractants désignés: **AT BE CH DE GB IT LI LU NL SE**

(74) Mandataire: **Bonnetat, Christian et al, Cabinet PROPI Conseils 23 rue de Léningrad, F-75008 Paris (FR)**

(54) Procédé et dispositif pour la commande et le contrôle de la position entre deux bords métalliques d'un organe de soudage à l'arc.

(57) Procédé pour le contrôle et la commande de la position, entre deux bords métalliques, d'un organe de soudage à l'arc animé d'un premier mouvement relatif de défilement par rapport auxdits bords et d'un second mouvement d'oscillation transversal au premier mouvement.

Selon l'invention, le procédé est caractérisé en ce que, avant soudage, on choisit pour chaque couche de soudage l'épaisseur désirée (e), on détermine la distance (D) séparant ledit axe (15) de la surface du matériau de soudage déposé à la profondeur donnée, de manière que, en premier lieu la distance ($\Delta$ 1) séparant l'extrémité du fil de la couche de soudure déposée, en position de butée l'organe de soudage sur le chanfrein, soit optimale, et en second lieu, pour une variation dans l'amplitude du mouvement oscillatoire, la variation de cette même distance ($\Delta$ 1) soit minimale pour une configuration donnée de l'organe de soudage (2), et en ce que l'on corrige au cours du soudage la position angulaire du plan médian d'oscillation (P1) autour dudit axe d'oscillation (15) en cas de dérive angulaire dudit plan.

Contrôle de soudage à l'arc à électrode fusible.

## Procédé et dispositif pour la commande et le contrôle de la position entre deux bords métalliques d'un organe de soudage à l'arc.

La présente invention concerne un procédé et un dispositif pour le contrôle et la commande de la position entre
deux bords métalliques formant un chanfrein, d'un organe
de soudage à l'arc avec électrode fusible, du type MIG,
monté sur un élément animé d'un premier mouvement relatif
de défilement longitudinal par rapport auxdits bords et
d'un second mouvement d'oscillation transversal au premier
mouvement, de manière qu'à chaque passage soit déposée
une couche de matériau de soudage d'épaisseur donnée.

On sait que les caractéristiques mécaniques de la soudure
de deux bords métalliques sont d'autant meilleurs, que
l'on maîtrise, lors du soudage, les différents paramètres
spécifiques de la technique de soudage à l'arc, à électrode fusible, tels que l'énergie issue de l'arc, la longueur de l'électrode dépassant de l'organe de soudage, la
vitesse de déroulement du fil, la vitesse de fusion de
l'électrode.

Or, l'opérateur n'a au départ, en fonction du type de métal
à souder, que le choix du gaz, du fil et du générateur
électrique employés. Il lui faut donc déterminer les valeurs
optimales des paramètres de soudage mentionnés précédemment; ce choix est d'autant plus important que la géométrie du chanfrein formé par les bords métalliques rapprochés
n'est pas régulière ni exempte de défauts.

Il est reconnu que la maîtrise de l'épaisseur des dépôts
successifs de métal de soudage permet d'assurer d'excellentes caractéristiques mécaniques de la soudure effectuée.

Cinq paramètres sont particulièrement importants, à savoir
l'intensité de courant, l'énergie de soudage, la longueur
de l'électrode dépassant de l'organe de soudage, la distance
séparant l'extrémité de l'électrode et la couche de soudure
déposée aux positions extrêmes dudit organe oscillant,
dénommé mouvement de recul, et enfin la variation de ce dernier.

L'énergie et l'intensité sont fonction du générateur électrique, la longueur du fil dépassant étant, elle , fonction du type de gaz et du fil utilisés. On doit donc définir les deux autres paramètres, à savoir ce qui est appelé mouvement de recul et les variations de ce dernier en fonction des variations de symétrie du chanfrein. Ceci est important dans la mesure où les asymétries du chanfrein affectent la qualité du dépôt des couches successives et notamment l'épaisseur de ladite couche dont la régularité est primordiale. La variation de ce mouvement de recul affecte surtout le dépôt de soudure à proximité des bords du chanfrein.

Cependant, les procédés et les dispositifs connus ne permettent pas de régler, d'ajuster et donc de contrôler ces deux paramètres.

En effet, le mouvement de recul est imposé au départ ainsi que la longueur de l'électrode dépassant de l'organe de soudage. Ainsi, afin de pouvoir maîtriser les différentes caractéristiques de la soudure, on est donc tenu de faire varier, l'énergie, l'intensité ou la tension électriques et/ou les vitesses d'oscillation et de déplacement longitudinal.

Ces dispositifs connus sont de conception électronique ou électrique, ce qui présente des inconvénients, notamment lors d'utilisations sur chantier. Les liaisons filaires, qui peuvent être en outre très longues (jusqu'à une centaine de mètres), entraine des désavantages, à savoir la gêne physique des câbles, des perturbations des mesures et réglages par la présence de corps magnétiques proches, ou de liaisons massiques défectueuses, par exemple. Les perturbations possibles des circuits électriques introduisent des retards ou des erreurs dans les corrections nécessaires en cours de soudage, affectant alors la qualité de la soudure.

De plus, la mise en oeuvre de tels dispositifs connus est lourde et longue et ces derniers ne peuvent être employés que par du personnel relativement spécialisé.

Les vérifications nécessaires sur le chantier, du fait des défauts des procédés et des dispositifs connus, sont incompatibles avec les impératifs de productivité et de souplesse requis par le travail in situ.

Le prix de revient de soudures ainsi réalisées est alourdit par le coût de ces dispositifs connus.

La présente invention remédie à ces inconvénients et concerne un procédé et un dispositif pour le contrôle et la commande de la position d'un organe de soudage mobile dans un chanfrein, faciles à mettre en oeuvre et permettant d'obtenir une optimisation des coûts par la parfaite maîtrise des paramètres et une épaisseur régulière de chaque couche, et ce quelles que soient les variations locales de géométrie du chanfrein, le dispositif pouvant être utilisé par une main d'oeuvre peu qualifiée et étant léger, de faible entretien, et de plus portable.

A cette fin, selon l'invention, le procédé pour le contrôle et la commande de la position entre deux bords métalliques formant un chanfrein, d'un organe de soudage à l'arc avec électrode fusible, du type MIG, monté sur un élément mobile animé d'un premier mouvement relatif de défilement longitudinal par rapport auxdits bords et d'un second mouvement d'oscillation transversal au premier mouvement, de manière qu'à chaque passage soit déposée une couche de matériau de soudage d'épaisseur donnée, est caractérisé en ce que, avant soudage, les données spécifiques du matériel de soudage tels que le fil, le gaz, le générateur électrique, étant données, on choisit pour pour chaque couche de soudage l'épaisseur désirée, on détermine la position de l'axe d'oscillation de l'élément mobile de soudage, d'une part latéralement suivant une droite transversale aux bords à souder, par butée de l'extrémité de l'organe de soudage sur les bords du chanfrein pour une profondeur donnée à l'intérieur de ce dernier, de façon que ledit axe soit en position médiane par rapport aux bords à souder, et d'autre part en hauteur, définissant ainsi la distance séparant ledit axe de la surface du matériau de soudage déposé à la profondeur donnée, de manière que,en premier lieu la distance séparant l'extrémité du fil de la couche de soudure déposée, en position de butée de l'organe de soudage sur le chanfrein, soit optimale en fonction de la géométrie du chanfrein et de la longeur du fil dépassant de l'organe de soudage et formant l'électrode fusible, et en second lieu, pour une variation d'amplitude du mouvement oscillatoire, la variation de cette même distance séparant le point d'impact du fil et la couche de soudure déposée soit minimale pour une configuration donnée de l'organe de soudage, et en ce que l'on corrige au cours du soudage la position angulaire du plan médian d'oscillation autour dudit axe d'oscillation en cas de dérive angulaire dudit plan, dû par exemple à une asymétrie de la découpe du chanfrein.

Ainsi, on comprend que si la distance de l'axe d'oscillation à la couche de soudure déposée, c'est-à-dire le rayon d'oscillation, est réglable, il est toujours possible de trouver une position en hauteur de l'axe d'oscillation, pour une géométrie donnée de l'extrémité de l'organe de soudage, telle qu'à la fois la valeur du mouvement de recul soit optimale, et la variation de cette même valeur soit minimale, ou même négligeable, pour une variation de l'amplitude géométrique du chanfrein. On pourra par exemple faire en sorte que ledit rayon d'oscillation soit maximal pour une configuration donnée de l'extrémité de l'organe de soudage et pour une amplitude d'oscillation donnée.

En outre, il se peut que,     au cours du soudage, l'axe d'oscillation ne se trouve plus dans le plan médian du chanfrein, pour une raison telle qu'un manque de parallélisme entre la direction de défilement longitudinal et les bords à souder, une asymétrie de l'angle des parois du chanfrein ou le non parallèlisme entre la direction de défilement et le plan supérieur des parties à souder. L'invention permet justement d'éviter ce défaut important par un réglage en rotation du plan médian d'oscillation par rapport audit axe. On  obtient par là une correction de la variation de la valeur du mouvement de recul, caractéristique de l'asymétrie et nuisible à la réalisation d'un dépôt de soudure constant et régulier, notamment à proximité des bords du chanfrein, en position de butée de l'organe de soudage. Si la variation de cette valeur tend vers zéro, le mouvement dudit organe tend vers la symétrie parfaite. Tout effet de la  variation de l'amplitude d'oscillation sera bien entendu rendu   négligeable,par le réglage du rayon d'oscil-lation précédemment décrit à une valeur telle, que la variation de la valeur du mouvement de recul soit très faible.
Afin d'optimiser le coût, et de simplifier la mise en oeuvre du procédé, les différents réglages en position étant effectués, avant soudage et à l'aide, soit d'une série d'abaques pré-établie, soit de moyens de calcul, en fonction du fil, du gaz et du générateur électrique utilisés, de la longueur du fil dépassant de l'organe de soudage, et de l'épaisseur désirée du métal de soudure déposé, on détermine les différents paramètres de soudage tels que la vitesse d'oscillation de l'organe de soudage, la vitesse de fusion du métal déposé, le taux de fusion, les vitesses d'avance du fil et de déplacement longitudinal de l'organe de soudage. Les abaques ou les moyens de calcul permettent de déterminer aisément et rapidement les paramètres en fonction de l'épaisseur choisie de la couche de soudure déposée.

L'invention concerne également un dispositif pour le contrôle et la commande de la position entre deux bords métalliques formant un chanfrein, d'un organe de soudage à l'arc avec électrode fusible, du type MIG, monté sur un élément mobile animé d'un premier mouvement relatif de défilement par rapport auxdits bords et d'un second mouvement d'oscillation transversal au premier mouvement, de manière qu'à chaque passage soit déposée une couche de matière de soudage d'épaisseur donnée, remarquable en ce qu'il comporte des premiers moyens de réglage de la position transversale de l'axe d'oscillation, des seconds moyens de réglage de la position en hauteur de l'axe d'oscillation par rapport au support mobile entrainant en translation l'organe de soudage, et des troisièmes moyens de réglage en rotation du plan d'oscillation médian de l'organe de soudage par rapport à l'axe d'oscillation, et en ce que l'organe de soudage est conformé par une buse, par exemple cylindrique ou tronçonnique et dont l'extrémité est susceptible de buter par ses bords contre les parois du chanfrein alternativement à chaque mouvement d'oscillation, le fil fusible portant de préférence dans les positions extrèmes de butée de la buse par son extrémité contre les parois dudit chanfrein.

Les réglages sont rendus possibles grâce aux premiers, seconds et troisièmes moyens de réglage actionnés directement par l'opérateur avec la simplification qu'apporte cette disposition.

De préférence, les premiers et seconds moyens de réglage sont constitués chacun d'une crémaillère associée à une roue dentée, cette dernière étant solidaire du bâti tandis que la crémaillère est fixée à l'organe de soudage mobile, ou inversement.

De même, les troisièmes moyens sont formés d'une vis, de préférence micrométrique, dont une extrémité est solidaire de la partie oscillante du bati entrainant l'organe de soudage, et coopérant avec un écrou fixé au bati de support, de façon que la rotation de la vis entraine la rotation du plan médian d'oscillation par rapport à l'axe d'oscillation.

Les réglages sont ainsi rendus particulièrement simples et rapides.

Afin de permettre l'adaptation au plus près entre l'amplitude d'oscillation imposée par le mécanisme de commande et l'amplitude réelle possible déterminée par la butée de l'organe de soudage sur les bords du chanfrein, il est prévu en outre des moyens de compression disposés entre la tige supportant la buse de soudage et le mécanisme d'oscillation de ladite tige, de manière qu'à chaque position extrême de la buse venant buter contre les parois du chanfrein, lesdits moyens soient comprimés d'une certaine valeur.

Avantageusement, les moyens de compression sont constitués d'un goujon vissé dans une tige, soumise à un mouvement transversal alternatif par le mécanisme d'oscillation, et susceptible de coulisser dans une bague elle-même coulissant dans un fourreau, entre la bague et l'épaulement terminal de la tige oscillant étant disposé, concentriquement au goujon, un premier ressort, tandis qu'un second ressort est placé entre la bague et le fond du fourreau , ledit fourreau étant solidaire de l'organe de soudage entrainé en oscillation, le goujon étant pourvu d'une tête de butée contre la paroi frontale de ladite bague.

Afin de mieux contrôler visuellement le réglage de l'orientation du plan médian d'oscillation par rapport à l'axe d'oscillation, grâce aux troisièmes moyens, les moyens de compression sont pourvus d'un organe de visualisation et de mesure de la compression,    tel qu'un cadran

graduée associé à une aiguille.

L'invention sera bien comprise à la lumière des dessins annexés.

La figure 1 montre une vue de côté, dans le plan de déplacement longitudinal parallèle aux bords des pièces à souder, du dispositif selon l'invention.

La figure 2 est une vue de droite du dispositif de la figure 1.

La figure 3 est une vue en plan du dispositif de la figure 1.

La figure 4 est une vue, à plus grande échelle, du dispositif de la figure 3 en coupe partielle.

La figure 5 est une vue en coupe de dessus de la figure 4.

La figure 6 est un schéma montrant le principe du centrage latéral de l'axe d'oscillation de l'organe de soudage par rapport à un chanfrein en coupe transversale de ce dernier.

La figure 7 est un schéma montrant,en coupe transversale du chanfrein,une dérive du plan médian d'oscillation par rapport au centre d'oscillation.

Les figures 8a, 8b et 8c montrent en coupe trois positions des moyens de compression, à plus grande échelle, en fonction des positions de la tige d'actionnement.

La figure 9 représente une série d'abaques correspondant à un fil et un gaz donnés.

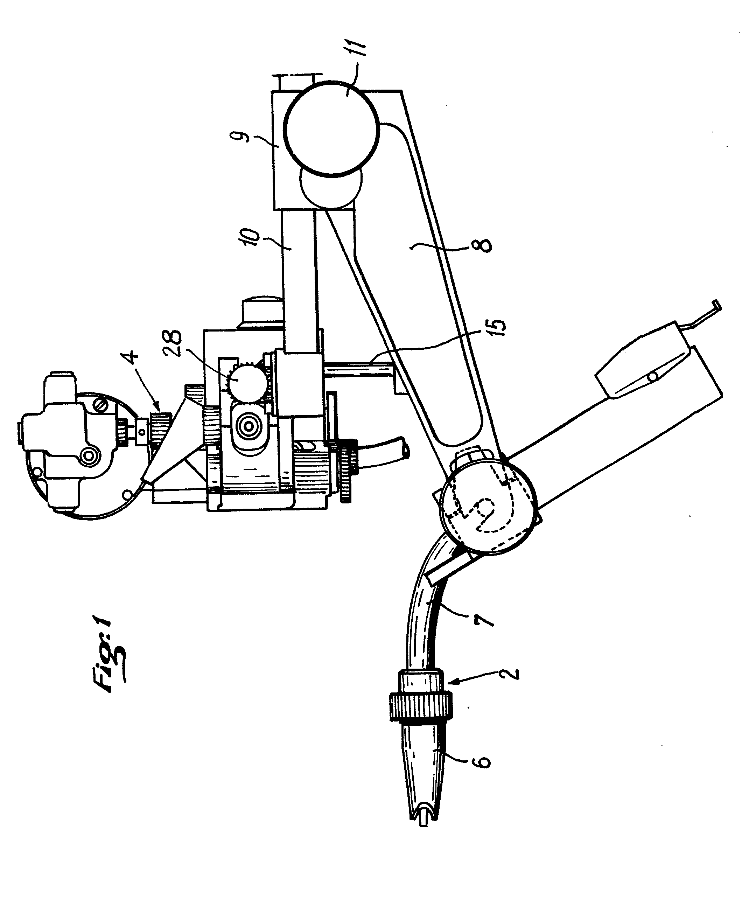

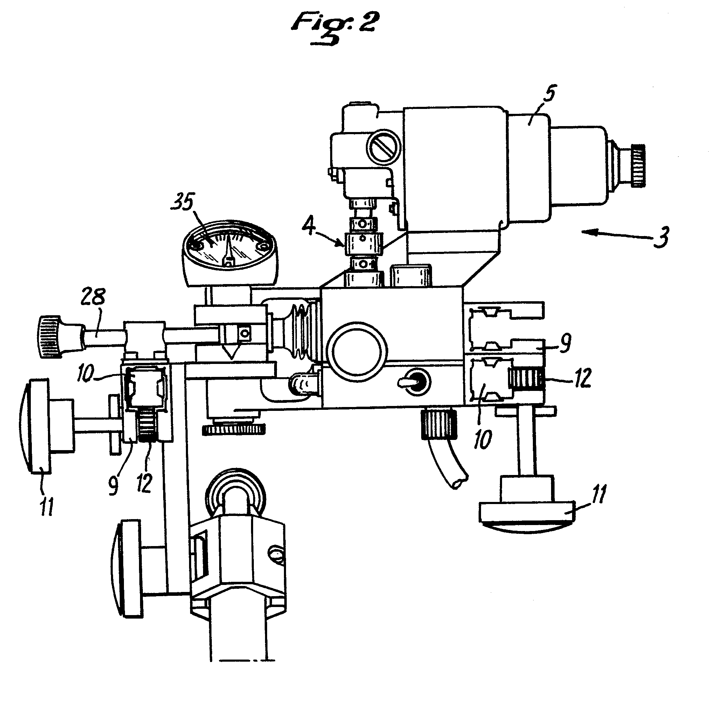

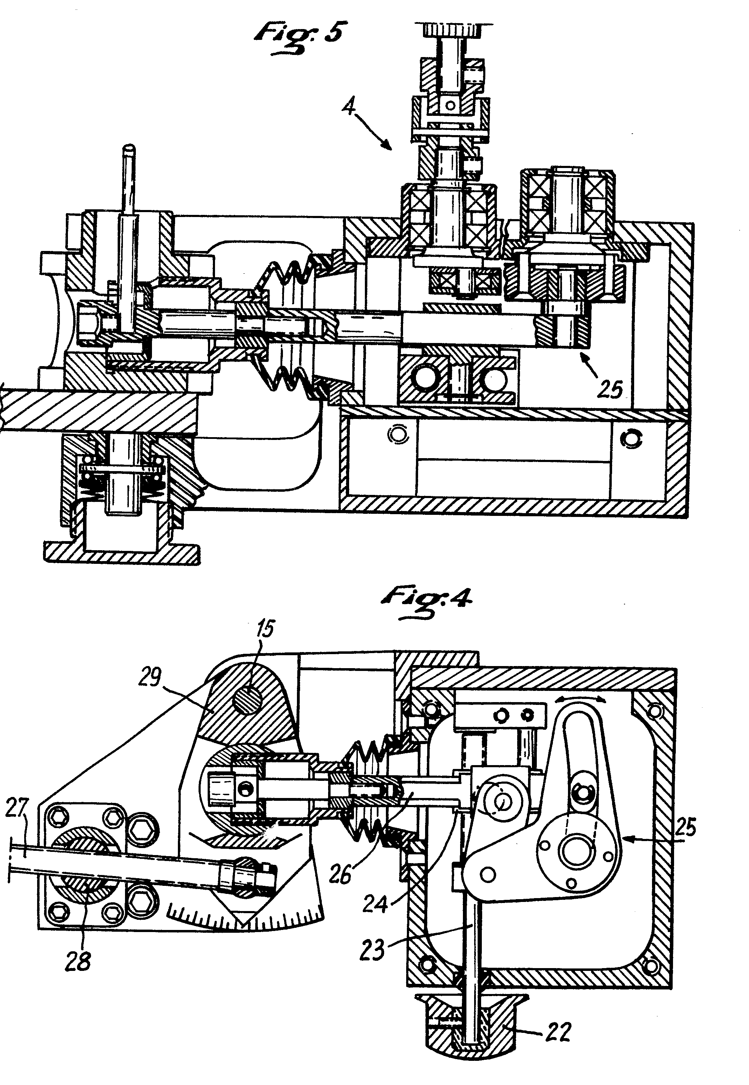

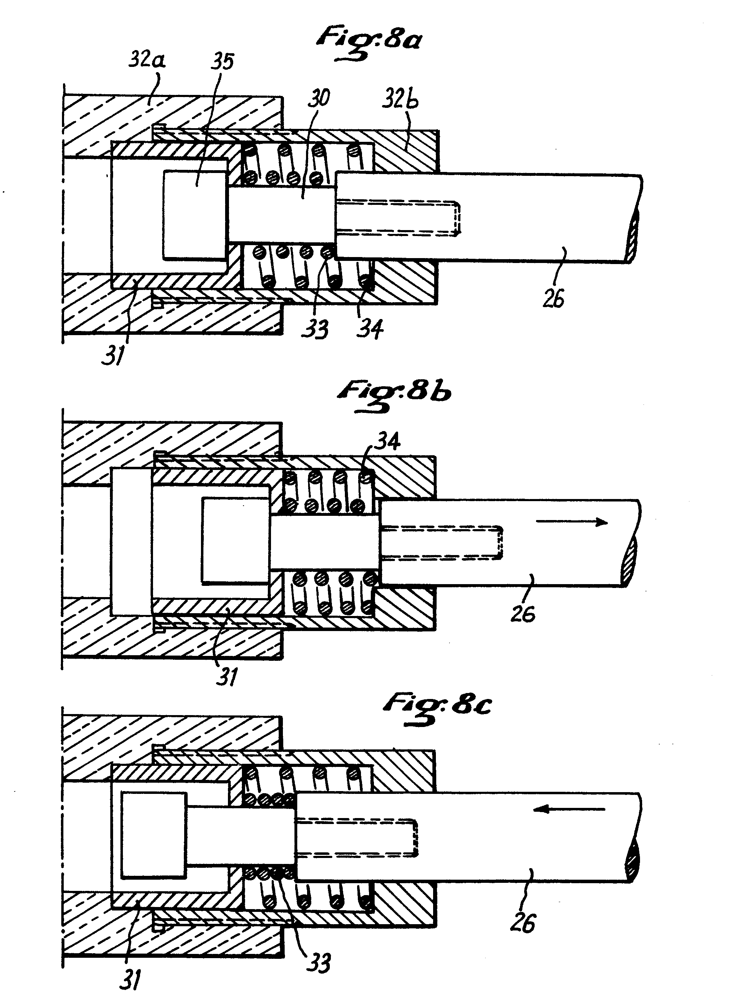

Le dispositif selon l'invention montré sur les figures 1 à 5 se rapporte au soudage de deux pièces métalliques par leurs bords formant un chanfrein. Ce dernier est par exemple constitué de deux bords biseautés rapprochés.

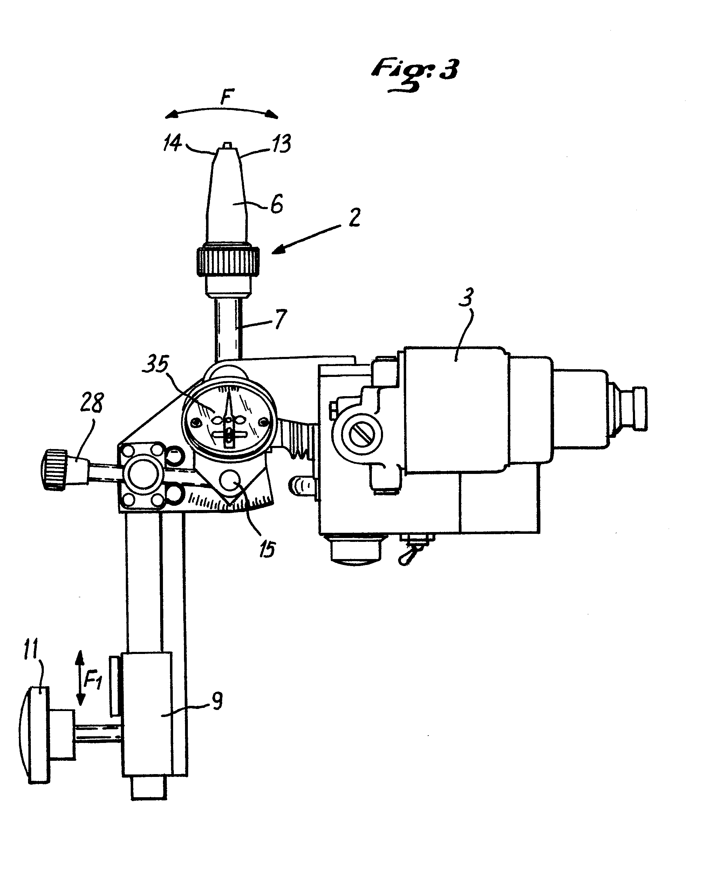

Le dispositif comporte un bâti 1 sur lequel est monté un organe de soudage 2, susceptible d'être translaté longitudinalement le long des bords des pièces à souder et de subir un mouvement d'oscillation transversale, selon la double flèche F de la figure 3 et perpendiculairement au plan de la figure 1. Le mouvement d'oscillation est obtenu par un ensemble d'entrainement 3 tel qu'un motoréducteur 4 associé à un moteur électrique 5.

Ainsi, à une hauteur donnée par rapport au chanfrein, l'organe de soudage 2 oscille alternativement tout en étant translaté, ce qui permet d'obtenir un dépôt de soudure continu.

L'organe de soudage 2 comporte une buse 6 disposée sur une tige 7 solidarisée de manière réglable sur un bras 8 rendu lui-même solidaire d'une glissière 9 coulissant sur un montant 10 du bati 1.

Une vis 11, reliée à une roue dentée 12 coopère avec le montant 10 pourvu d'une crémaillère, et permet par sa rotation de faire coulisser la glissière 9 et donc de translater en hauteur, selon la double flèche $F_I$ de la figure 3, l'organe de soudage 2 et notamment la buse 6. Cette dernière comporte à son extrémité deux biseaux latéraux 13 et 14 et est creuse afin de laisser passage à un fil constituant l'électrode fusible de l'organe de soudage du type MIG (Metal Inert Gas).

Le mouvement oscillatoire de l'organe de soudage 2 est effectué par rapport à un axe d'oscillation 15 parallèle au mouvement de défilement longitudinal du dispositif.

Le dispositif comporte en outre des moyens de réglage de la position latérale de l'organe de soudage dans un plan transversal au chanfrein. Ce réglage permet d'ajuster la position de l'axe d'oscillation 15 selon le plan médian P du chanfrein 16 (voir la figure 6) constitué par deux pièces 17 et 18 à souder. Ces moyens de réglage, représentés de manière schématique, sont par exemple constitués d'une crémaillère 19 associée à une roue dentée 20 actionnée par l'opérateur.

Ce réglage est effectué comme suit.

Grâce à la vis 11 des moyens de réglage en hauteur, tout en agissant sur la roue dentée 20, on amène le dispositif à un niveau du chanfrein en positions extrêmes d'oscillation, c'est-à-dire dans les positions $6_1$, $21_1$ et $6_2$, $21_2$.

Le dispositif comprend de plus des moyens de réglage de l'amplitude oscillatoire de l'organe de soudage 2, grâce à une vis 22 agissant, par l'axe 23, sur un coulisseau 24. Le mécanisme d'entrainement 25 en oscillation de l'organe de soudage 2 transforme le mouvement de rotation du motoréducteur 4 en un mouvement de translation alternative de la tige 26 provoquant l'oscillation de l'organe de soudage 2 autour de l'axe d'oscillation 15.

La rotation de la vis 22 permet de limiter, ou au contraire augmenter, l'amplitude du mouvement oscillatoire.

Selon une autre caractéristique importante de l'invention, le dispositif est pourvu de moyens de réglage en rotation, par rapport à l'axe d'oscillation 15, du plan médian d'oscillation de l'organe de soudage 2.

Ces moyens sont formés d'une vis 27 coopérant avec un écrou 28, prisonnier de la partie non oscillante de bâti, l'extrémité de la vis étant solidaire d'un bras de levier 29 articulé autour de l'axe d'oscillation 15.

0098758

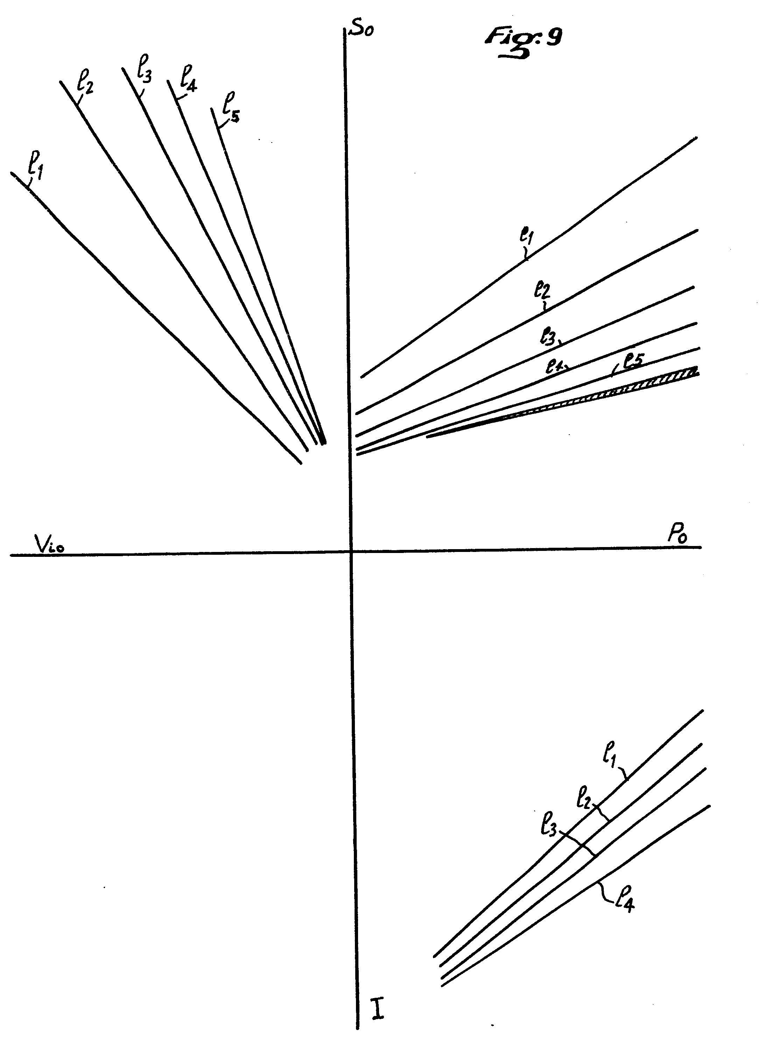

Le dispositif comporte de plus des moyens de compression disposés entre la tige de support 7 et le mécanisme d'entrainement 25 oscillatoire (notamment la tige oscillante 26), représentés à plus grande échelle sur les figures 8a, 8b, 8c. Ces moyens de compression sont constitués d'un goujon 30 vissé dans la tige oscillante 26 et susceptible de coulisser dans une bague 31, elle-même coulissant dans un fourreau 32a et 32b. Entre la bague 31 et l'épaulement d'extrémité de la tige 26 est disposé, autour d'un goujon 30, un premier ressort 33, tandis qu'entre la bague 31 et le fond du fourreau 32b est placé un second ressort 34. La vis 26 est susceptible de coulisser dans le fourreau 32b. La tête 35 du goujon 30 peut buter contre la paroi frontale de la bague 31.

L'utilisation du dispositif, selon le procédé de l'invention, est la suivante.

On effectue tout d'abord le réglage de la position transversale de l'axe d'oscillation 15 en position de symétrie ainsi que décrit précédemment en se réferant à la figure 6.

Ensuite, on amène la buse 6 à la profondeur désirée par actionnement de la vis 11 provoquant le coulissement de la glissière 9, et donc la translation verticale de l'organe de soudage 2. On enclenche le mécanisme d'entrainement oscillatoire à très faible vitesse jusqu'à ce que la buse 6 porte contre l'un des bords du chanfrein. Par action sur la vis 11 de profondeur (ou de hauteur) et la vis de réglage en position transversale (selon une droite sensiblement horizontale), on dispose l'organe de soudage 2 de manière que l'extrémité de l'électrode fusible 21 touche les bords du chanfrein en position extrème d'oscillation de ladite buse 6.

Pour un fil, un générateur et un gaz donnés, il est possible de déterminer les données telles que par exemple la longueur des l'électrode 21 dépassant de la buse 6.

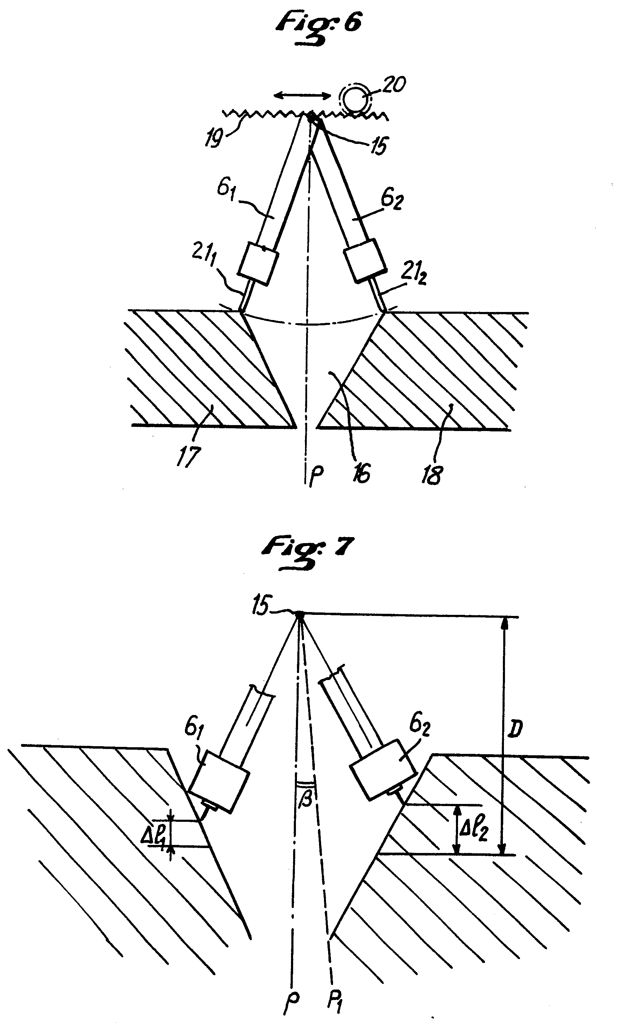

On peut trouver une position en hauteur de l'axe d'oscillation 15 par rapport à la couche à déposer, telle que le point d'impact du fil fusible par rapport à ladite couche soit placé de manière correcte, aux deux positions extrêmes du mouvement oscillatoire pour lesquelles la buse 6 bute contre les parois alternativement du chanfrein. Ce réglage de la hauteur, de l'axe d'oscillation est important, dans la mesure où il permet de déterminer une valeur de la hauteur $\underline{D}$ optimale, pour une variation de l'amplitude, due par exemple à une variation géométrique du chanfrein. La valeur de la hauteur D optimale sera celle pour laquelle la variation du mouvement de recul $\Delta l$ (voir la figure 7) c'est-à-dire la distance séparant l'extrémité de l'électrode 21 de la couche à déposer aux positions extrêmes $6_1$ et $6_2$ de la buse 6, soit minimale, voire négligeable En l'occurence, on prend une hauteur $\underline{D}$ maximale pour une amplitude d'oscillation et pour une configuration de buse données.On peut également faire varier le diamètre de la buse ou sa forme (pente des biseaux 13 et 14)

Ainsi, par butée de la buse 6 sur la paroi du chanfrein on obtient un contrôle de l'amplitude d'oscillation de l'organe de soudage 2.

A l'aide soit d'une série d'abaques (voir la figure 9), soit de moyens de calcul, on détermine ensuite les paramètres des opérations de soudage , tels que le taux de fusion $P_o$, la vitesse d'oscillation, la vitesse de défilement longitudinal, l'intensité de courant I, la vitesse de déroulement du fil fusible. Ces données sont fonction d'une valeur, déterminée à l'avance, de l'épaisseur $\underline{e}$ de la couche de soudure désirée, et de lalongueur $\underline{l}$ (référence 21) de l'électrode de fusible dépassant de la buse 6. Chaque série d'abaques est réalisée en fonction de la nature du fil et du gaz utilisés.

En cours de soudage, en cas de variations de géométrie du chanfrein, il convient d'en corriger les effets néfastes sur le dépôt de soudage. A cet effet, l'opérateur ajuste le plan de symétrie $P_1$ du mouvement d'oscillation en fonction du plan de symétrie $\underline{P}$ du chanfrein (voir la figure 3) de manière que la variation de $\Delta l$ (entre les valeurs $\Delta l_1$ et $\Delta l_2$) soit minimale, voire nulle; L'angle $\beta$ entre ces deux plans $\underline{P}$ et $P_1$ sera réduit au minimum en actionnant la vis 28 permettant de faire varier l'inclinaison du plan de symétrie P1 du mouvement oscillant, par rapport à l'axe d'oscillation 15.

Un autre moyen complémentaire de cet ajustement est rendu possible grâce aux moyens de compression dont est muni le dispositif. En effet, ces moyens permettent de faire en sorte qu'il y ait une adaptation entre l'amplitude de balayage donnée par le mécanisme 25 d'une part, et le balayage réel possible déterminé par la butée de la buse sur les parois du chanfrein d'autre part.

Les moyens de compression autorisent un mouvement relatif de la tige 26 oscillante par rapport à la buse 6 en position fixe de cette dernière lorsqu'elle est butée par exemple, alors que le réglage initial du mécanisme 25 avait prévu une amplitude plus grande (par la vis 22). Sur la figure 8a les ressorts 33 et 34 sont au repos, ainsi que la tige 26. Les figures 8b et 8c montrent pour une position fixe de la buse 6 (et donc du fourreau 32a, 32b solidaire de l'organe de soudage 2) le mouvement possible respectivement vers la droite (figure 8b) et la gauche (figure 8c) de la tige 26. Dans le premier cas, la bague 31 coulisse dans le fourreau et comprime le ressort 34, tandis que dans le second cas, l'épaulement de la tige 26 repousse le ressort 33 qui se trouve comprimé puisqu'il bute sur la bague 31.

Les moyens de compression sont associés à un organe de régularisation de la compression des ressorts 33 et 34, tel qu'un cadran 35 permettant de révéler la valeur de cette compression en position de butée de la buse sur les bords du chanfrein.

Avantageusement, on donne à l'amplitude commandée par le mécanisme 26 une valeur légèrement supérieure à celle correspondant au profil théorique du chanfrein, cette amplitude additionnelle peut être différente de chaque côté. En outre, pour tenir compte des erreurs entre la direction de défilement longitudinal et la ligne médiane du chanfrein, on ajoute 1 ou 2 mm de chaque côté à l'amplitude.commandée.

Les vitesses d'oscillation et de défilement longitudinal étant réglées, et une certaine amplitude additionnelle étant donnée (cette dernière sera lue sur le cadran 35), le contrôle du dépôt consistant à estimer visuellement la différence entre les valeurs du mouvement de recul $\Delta$ 1 en positions extrèmes gauche et droite de la buse 6 sur les parois du chanfrein.

A l'aide du cadran de visulalisation 35, l'opérateur surveille la valeur de la compression des ressorts, caractéristique de la différence entre l'amplitude commandée e : l'amplitude réelle du mouvement oscillatoire de la buse.

Dans le cas où la compression varie de manière symétrique à droite et à gauche (lorsque alternativement la buse bute sur les parois du chanfrein), ceci signifie que l'amplitude réelle varie; il suffit alors de corriger par actionnement de la vis 22 réglant la valeur de l'amplitude commandée.

Si la compression varie de manière dissymétrique, cela veut dire que le plan d'oscillation médian P1 (voir la figure 7) fait un angle $\beta$ non nul avec le plan médian P du chanfrein, ceci ayant pour cause un manque de parallélisme entre les bords du chanfrein et la direction longitudinale de défilement. Il convient dans ce cas, de régler et d'ajuster la position du plan d'oscillation par la vis de réglage 28.

Dans le cas où, au cours du soudage , le positionnement du point d'impact du fil fusible par rapport à la couche de soudure à déposer varie, il suffit de rapprocher ou d'éloigner la buse ou d'augmenter (ou diminuer) la distance D de l'axe d'oscillation à la couche à déposer.

Ainsi, grâce au dispositif et au procédé selon l'invention, il est possible dè maîtriser totalement les paramètres nécessaires à la réalisation d'un soudage efficace, sûr et ce, de façon économique. L'obtention d'une épaisseur constante de la couche de soudure déposée assure une qualité de soudure irréprochable, quelles que soient les formes du chanfrein.

Le dispositif selon l'invention fonctionne également hors chanfrein en passe de finition ou en rechargement à l'aide de butée auxiliaire montée an option.

On comprend que, grâce à l'invention, il est possible de contrôler la qualité de la soudure au fur et à mesure de l'opération de soudage, puisque le procédé et son dispositif d'application permettent d'obtenir une épaisseur constante de la couche de soudure déposée.

Les séries d'abaques peuvent être remplacées par des moyens de calcul, permettant par introduction des données choisies (épaisseur de la couche de soudure par exemple) de déterminer les autres paramètres (longueur 1 de l'électrode dépassant de la buse).

Il a été décrit un mode d'utilisation dans lequel la correction, notamment de l'angle $\beta$ formé entre le plan

médian P1 d'oscillation et la plan médian P du chanfrein (figure 7), est effectuée visuellement par l'opérateur qui agit alors sur les vis de réglage correspondantes. Bien entendu, l'information donnée par les moyens de compression (c'est-à-dire la valeur de la compression des ressorts) peut être également utilisée par des moyens de calcul et de comparaison susceptibles de commander automatiquement la correction nécessaire.

Il est possible également de prévoir des moyens de régulation électriques  reliés au générateur électrique et fournissant ainsi les données relatives à ce dernier (intensité, énergie), lesdites données étant par exemple alors prises en compte par les moyens de calcul pour déterminer les paramètres nécessaires.

REVENDICATIONS

1- Procédé pour le contrôle et la commande de la position entre deux bords métalliques formant un chanfrein, d'un organe de soudage à l'arc avec électrode fusible, du type MIG, monté sur un élément mobile animé d'un premier mouvement relatif de défilement par rapport aux dits bords et d'un second mouvement d'oscillation transversal au premier mouvement, de manière qu'à chaque passage soit déposée une couche de matériau de soudage d'épaisseur donnée, caractérisé en ce que, avant soudage, les données spécifiques du matériel de soudage telles que le fil, le gaz, le générateur électriques étant données, on choisit pour chaque couche de soudage l'épaisseur désirée (e), on détermine la position de l'axe d'oscillation (15) de l'élément mobile de soudage (2), d'une part latéralement suivant une droite transversale aux bords à souder, par butée de l'extrémité (6) de l'organe de soudage (2 ) sur les bords du chanfrein (16) pour une profondeur donnée à l'intérieur de ce dernier, de façon que ledit axe (15) soit en position médiane par rapport aux bords à souder, et d'autre part en hauteur, définissant ainsi la distance (D) séparant ledit axe (15) de la surface du matériau de soudage déposé à la profondeur donnée, de manière que, en premier lieu la distance ( Δ 1) séparant l'extrémité du fil de la couche de soudure déposée, en position de butée l'organe de soudage sur le chanfrein, soit optimale en fonction de la géométrie du chanfrein et de la longueur (21,1) du fil dépassant de l'organe de soudage (2) et formant l'électrode fusible, et en second lieu, pour une variation dans l'amplitude du mouvement oscillatoire, la variation de cette même distance (Δ 1) séparant le point d'impact du fil et la couche de soudure déposée soit
minimale pour une configuration donnée de l'organe de
soudage (2), et en ce que l'on corrige au cours du soudage la position angulaire du plan médian d'oscillation
(P1) autour dudit axe d'oscillation (15) en cas de dérive
angulaire dudit  plan, due par exemple à une asymétrie
de l'angle de découpe du chanfrein.

2- Procédé selon la revendication 1, caractérisé en ce
que les différents réglages en position étant effectués,
avant soudage et à l'aide, soit d'une série d'abaques
pré-établie, soit de moyens de calcul, en fonction du fil,
du gaz et du générateur électrique utilisés, de la longueur du fil (21,1) dépassant de l'organe de soudage (2),
et de l'épaissuer désirée (e) du métal de soudure déposée,
on détermine les différents paramètres de soudage tels
que la vitesse d'oscillation de l'organe de soudage, la
vitesse de fusion (Vio) du métal déposé, le taux de
fusion (Po), les vitesses d'avance du fil et de déplacement longitudinal de l'organe de soudage.

3- Dispositif pour la mise en oeuvre du procédé selon l'une
des revendications 1 ou 2, pour le contrôle et la commande de la position entre deux bords métalliques formant
un chanfrein, d'un organe de soudage à l'arc avec électrode fusible, du type MIG, monté sur un élément mobile
animé d'un premier mouvement relatif de défilement par
rapport auxdits bords et d'un second mouvement d'oscillation transversal  au premier mouvement, de manière qu'à
chaque passage soit déposée une couche de matériau de soudage d'épaisseur donnée, caractérisé en ce qu'il comporte
des premiers moyens de réglage de la position transversale
de l'axe d'oscillation (15), des seconds moyens de réglage
(9, 11) de la position en hauteur de l'axe d'oscillation (15),
par rapport au support mobile entrainant en translation
l'organe de soudage, et des troisièmes moyens de réglage
(27,28) en rotation du plan d'oscillation médian (P1) de l'organe de soudage (2) par rapport à l'axe d'oscillation (15), et en ce que l'organe de soudage est conformé par une buse (6) par exemple cylindrique et dont l'extrémité est susceptible de buter par ses bords contre les parois du chanfrein alternativement à chaque mouvement d'oscillation, le fil fusible (21) portant de préférence dans les positions extrêmes de butée de la buse par son extrémité contre les parois dudit chanfrein.

4- Dispositif selon la revendication 3, caractérisé en ce que les premiers et seconds moyens de réglage sont constitués chacun d'une crémaillère associée à une roue dentée (12), cette dernière étant solidaire du bâti tandis que la crémaillère est fixée à l'organe de soudage mobile, ou inversement.

5- Dispositif selon l'une des revendications 3 ou 4, caractérisé en ce que les troisièmes moyens sont formés d'une vis (27), de préférence micrométrique, dont une extrémité est solidaire de la partie oscillante (29) du bâti entrainant l'organe de soudage (2), et coopérant avec un écrou (28) fixé au bâti du plan médian d'oscillation (P1) par rapport à l'axe d'oscillation (15).

6- Dispositif selon la revendication 5, caractérisé en ce qu'il comporte en outre des moyens de compression disposés entre la tige (7) supportant la buse de soudage et le mécanisme d'oscillation (25) de ladite tige (7), de manière qu'à chaque position extrême de la buse (6) venant buter contre les parois du chanfrein, lesdits moyens soient comprimés d'une certaine valeur.

7- Dispositif selon la revendication 6, caractérisé en ce que les moyens de compression sont constitués d'un goujon (30) vissé dans une tige (26), soumise à un mouvement transversal alternatif par le mécanisme d'oscillation (25), et susceptible de coulisser dans une bague

(31) elle-même coulissant dans un fourreau (32a, 32b), entre la bague (31) et l'épaulement terminal de la tige oscillante (26) étant disposé concentriquement au goujon (30) un premier ressort (33), tandis qu'un second ressort (34) est placé entre la bague (31) et le fond du fourreau (32b), ledit fourreau étant solidaire de l'organe de soudage (2) entrainé en oscillation, le goujon (30) étant pourvu d'une tête (35) susceptible de buter contre la paroi frontale de ladite bague (31).

8- Dispositif selon l'une des revendications 6 ou 7, caractérisé en ce que les moyens de compression sont pourvus d'un organe de visualisation et mesure de la compression, tel qu'un cadran (35) gradué associé à une aiguille.

Fig:1

*Fig. 2*

Fig. 3

*Fig. 5*

4

25

*Fig. 4*

15

29

27

28

26

24

23

22

25

## Fig. 8a

32a   35   30   32b

31   33   34   26

## Fig. 8b

34

31   26

## Fig. 8c

31   33   26

0098758

Fig. 6

Fig. 7

Fig. 9